# FASCICULE DE BREVET EUROPEEN

(11) **EP 0 903 527 B1**
(45) Date de publication et mention de la délivrance du brevet: **11.12.2002**
(21) Numéro de dépôt: 98402190.7
(22) Date de dépôt: 04.09.1998
(51) Int. Cl.: F16L 11/08

(54) **Structure de conduite flexible comportant un tube interieur métallique continu**
Aufbau einer flexiblen Rohrleitung, die ein durchgehendes Innenrohr aus Metall beinhaltet
Structure of a flexible conduit comprising a continuous interior pipe made of metal

(30) Priorité: 18.09.1997 FR 9711737
(43) Date de publication de la demande: 24.03.1999
(73) Titulaire: INSTITUT FRANCAIS DU PETROLE, 92852 Rueil-Malmaison Cedex (FR)
(72) Inventeur: Odru, Pierre, 94120 Fontenay sous Bois (FR)

(56) Documents cités:
- EP-A- 0 192 922
- WO-A-97/13091
- DE-A- 2 642 230
- FR-A- 2 512 165
- FR-A- 2 569 462
- FR-A- 2 709 529

## Description

Les conduites flexibles renforcées utilisées notamment dans le transport des effluents pétroliers, utilisent classiquement des gaines d'étanchéité en matériaux thermoplastiques qui présentent notamment l'avantage de permettre de grandes déformations mécaniques et une facilité de mise en oeuvre par extrusion. Par exemple, les documents WO 97/13091 et DE 26.42.230 proposent une conduite flexible comportant respectivement une gaine d'étanchéité interne en polyéthylène haute densité ou un tube métallique enroulable interne et une gaine d'étanchéité interne en polychlorure de vinyle.

Ils présentent par contre d'importantes limitations, principalement:
- limitations des caractéristiques en fonction de la température;
- non étanchéité totale aux gaz (par diffusion dans le temps), notamment à H₂S, ce qui présente le grave problème de pouvoir induire la corrosion des matériaux métalliques placés à l'extérieur de ces gaines. Or, ces matériaux, utilisés pour fabriquer des armures destinées à résister à la pression et à la traction, doivent par définition conserver dans le temps leurs caractéristiques originelles.

Les matériaux métalliques sont connus pour être étanches aux gaz et résister sans problème majeur à la température maximale que peut atteindre un effluent pétrolier. Par contre, ils ne sont pas, ou peu, flexibles en comparaison à des matériaux plastiques en polymère. Toutefois, de nombreuses applications existent (coiled tubing en forage, canalisations rigides déroulées en mer pour le transport des effluents pétroliers) où des tubes en acier peuvent être fléchis sur de petits rayons de courbure principalement par déformation dans le domaine plastique du matériau.

On a déjà tenté d'utiliser des tubes continus ondulés de façon à rendre plus flexible la canalisation, mais dans ce cas, la résistance à la pression interne impose dans les applications présentes à renforcer les creux des ondulations, par exemple avec du matériau composite en fibres de renfort imprégnées de résine thermodurcissable.

Ainsi, l'objet de la présente invention concerne une conduite flexible renforcée telle que décrite dans la revendication 1. La conduite comporte en combinaison, de l'axe de la conduite vers l'extérieur, un tube intérieur métallique cylindrique et étanche aux effluents transportés par ladite conduite, une couche de résistance à la pression interne et à la pression externe constituée par des armures enroulées en hélice à pas faible autour dudit tube intérieur, une gaine d'étanchéité en matière plastique extrudée.

Dans une variante, la structure de la conduite peut comporter une couche intermédiaire en matière plastique est intercalée entre le tube intérieur et la couche de résistance aux pressions.

La couche intermédiaire peut être extrudée sur ledit tube continu.

La couche intermédiaire peut être constituée par une bande enroulée sur le tube continu.

La conduite peut comporter au moins une couche d'armures de résistance à la traction disposée extérieurement à la couche de résistance à la pression.

La gaine d'étanchéité peut être disposée entre la couche de d'armures de résistance à la pression et la couche d'armures de résistance à la traction.

La gaine d'étanchéité peut être disposée extérieurement à la couche d'armures de résistance à la traction.

La gaine d'étanchéité peut être protégée extérieurement par une couche flexible métallique, par exemple un feuillard agrafé.

La conduite peut comporter deux gaines d'étanchéité, l'une directement sur la couche de résistance à la pression et l'autre au-dessus de la couche des armures de résistance à la traction.

Les armures de résistance à la pression peuvent avoir un profil en T.

La structure de conduite flexible selon l'invention décrite ci-dessous permet l'insertion d'un tube cylindrique mince en matériau métallique choisi pour être insensible à de la corrosion (par exemple de l'acier inoxydable ou du titane) dans un ensemble flexible composé d'armures de résistance à la pression, interne et externe, d'armures de résistance aux efforts longitudinaux, et de gaines plastiques, externe ou intermédiaire. Ladite structure flexible est dimensionnée de façon à répondre à un cahier des charges correspondant aux efforts de pose et de service au fond de la mer, en tant que canalisation sensiblement horizontale pour le transport d'effluents corrosifs. Dans la plupart des cas, ledit flexible est posé dans une tranchée (connue sous le nom de "souille"), ensuite recouverte de matériaux destinés à empêcher le flexible de "flamber", c'est-à-dire de s'allonger et de créer des boucles verticales sous l'effort de la pression interne alors que les deux extrémités sont bloquées.

La présente invention sera mieux comprise et ses avantages apparaîtront plus clairement à la lecture qui suit de la description d'exemples de structures de conduite flexible, illustrée par les figures ci-annexées, parmi lesquelles :
- la figure 1 montre en coupe partielle les constituants d'une structure de conduite flexible selon l'invention, et
- la figure 2 montre une variante de structure.

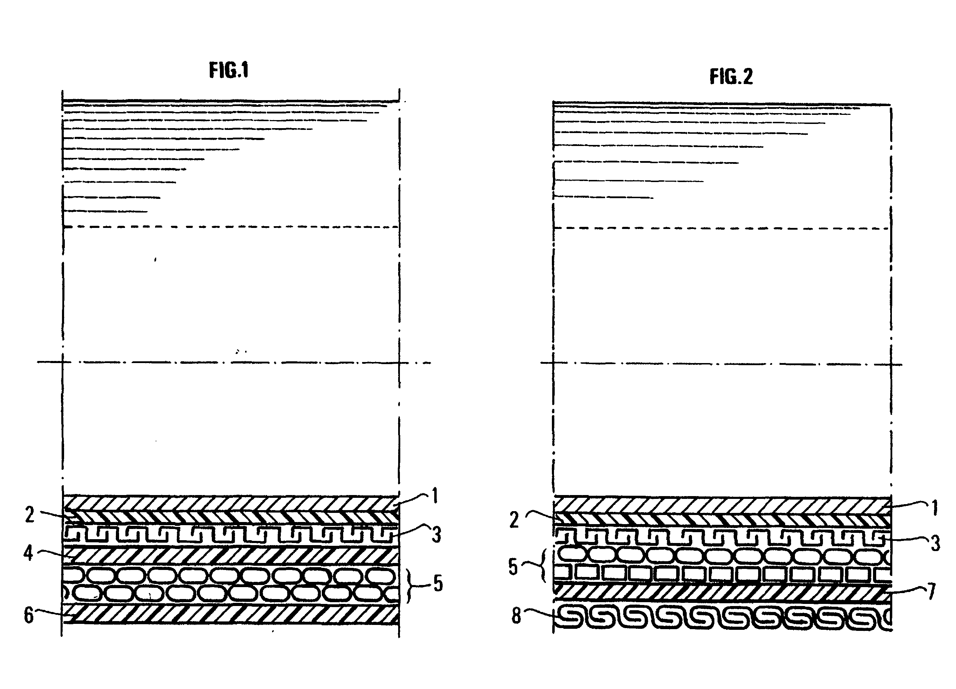

Sur la figure 1, la référence 1 désigne un liner métallique interne étanche aux gaz et résistant à la température. Par "liner" métallique, on dénomme ici un tube cylindrique à paroi mince, généralement fabriqué à partir d'une bande continue soudée selon un cordon longitudinal ou en spirale. La qualité de la soudure est telle que le tube est étanche aux fluides à la pression de test des conduites flexibles selon les normes connues dans la profession. Bien entendu, le liner par lui même, compte tenu de sa faible épaisseur, ne résiste pas à la pression de test, de la même façon qu'une gaine d'étanchéité en plastique ne résiste pas seule à la pression. Le tube interne mince (liner) est fabriqué à partir d'un matériau métallique résistant à la corrosion, par exemple: de l'acier austéno ferritique (UNS S31803), de l'acier austénitique (UNS S31254), ou à base nickel (N 06625), suivant les conditions d'utilisation. L'épaisseur typique du tube est comprise entre 0,5 et 3 mm.

Nomenclatures et caractéristiques mécaniques des métaux susceptibles d'être utilisés:
- acier inox AISI 316L (référence UNS :S31603) :
   limite élastique : >280 MPa, limite de rupture : 500 MPa;
- acier austéno ferritique 2205 (UNS :S31803) :
   limite élastique : >450 MPa, limite de rupture : 680 à 880 MPa, allongement à rupture : >25%;
- acier austénitique 6 Mo (UNS :S31254) :
   limite élastique: >300 MPa, limite de rupture : >650 MPa, allongement à rupture : >35%;
- titane non allié grade 2 (UNS :R50400) ou 3 (UNS :R50550) :
   limite élastique : >275 MPa, limite de rupture : >345 MPa, allongement à rupture de l'ordre de 20%, module : 110 GPa.

Le tableau ci-après donne le niveau de déformation (% d'allongement) en fonction du diamètre du liner et du rayon d'enroulement sur la bobine.

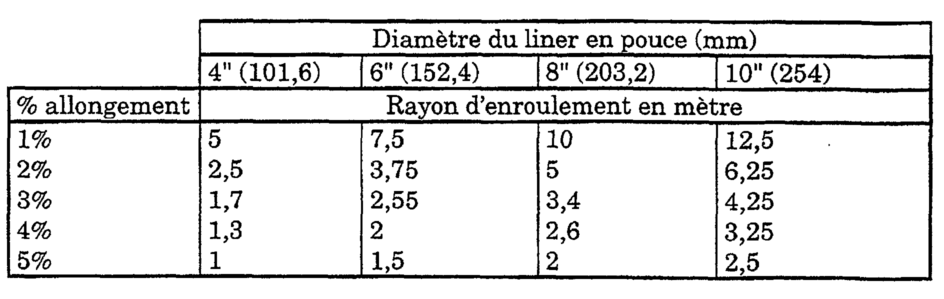

Dans la réalité, il sera certainement difficile de dépasser des taux de déformation de 3%, compte tenu des risques de flambage coque du liner.

La référence 2 désigne une éventuelle couche ou nappe intermédiaire en matériau plastique ou élastomère mince, éventuellement chargée, par exemple par des fils de renfort en acier, verre ou aramide, La couche 2 est destinée à éviter les contacts à caractère de poinçonnement entre le tube interne mince et la couche de résistance à la pression disposée au-dessus. Cette couche 2 peut être extrudée ou bobinée sur le tube interne 1. L'opportunité de disposer cette couche de protection mécanique dépend notamment des conditions de service de la conduite, de la nature du matériau du liner,...

La référence 3 désigne une couche constituée d'un ou de plusieurs fils métalliques enroulés en hélice sensiblement perpendiculairement à l'axe du tube, avec ou sans agrafage (par exemple fils d'acier rectangulaires, ou fils présentant une forme de T, de Z, ou de U permettant l'agrafage). Cette couche 3 de renfort est généralement appelée voûte de pression car elle est dimensionnée pour résister à la pression transmise par le tube mince (liner) dans le cas d'une pression interne, et pour résister à la pression extérieure (collapse) puisque le tube mince 1 (liner) n'a pas de forte résistance ni de carcasse interne pour supporter la pression extérieure, par exemple due à la pression hydrostatique. Ces fils sont séparés par un jeu, par exemple de l'ordre de 7 à 8% de la largeur du fil, permettant la flexibilité de la couche et donc de la conduite. L'épaisseur des fils est dimensionnée typiquement de manière à permettre à cette couche de résister à la fois aux efforts de pression interne, et aux efforts de pression externe (rupture par flambage hydrostatique ou écrasement de la paroi).

La référence 4 désigne une gaine en matériau thermoplastique (par exemple de type polyamide), étanche, destinée à permettre la tenue à la pression externe de la couche 3 sous-jacente. Le dimensionnement en pression externe de la précédente couche de résistance 3 se fait donc à partir d'une application de la pression sur le diamètre extérieur de cette gaine.

La référence 5 désigne une ou deux nappes d'armures de résistance à la traction, présentant des fils généralement rectangulaires disposés suivant un pas d'hélice allongé par rapport à l'axe du tube, par exemple autour d'un angle compris entre 25° et 35°. La précision de cet angle est compris entre ± 5° et de préférence ± 2°. Cette couche d'armures de renfort est plus particulièrement destinée à reprendre l'effet de fond du à la pression interne et/ou le poids de la structure lors de la pose de la conduite flexible.

La référence 6 désigne une gaine d'étanchéité externe, par exemple en matériau polyamide.

Sur la figure 2, la variante comporte le liner mince 1, la couche optionnelle 2 en plastique, la couche 3 de résistance à la pression interne et externe. Dans cette variante, les armures de résistance à la traction 5 sont disposées directement sur la couche de fils circonférentiels 3. Autour de la couche 5, une gaine d'étanchéité 7 vis-à-vis de la pression externe a été extrudée. Cette gaine 7, en comparant avec la structure de la figure 1, joue les rôles de la gaine 4 et de la gaine 6. En effet, si les applications d'une telle structure permettent de garantir la pérennité de l'étanchéité de la gaine externe (6 sur la figure 1 ou 7 sur la figure 2), il n'est pas nécessaire d'avoir deux gaines externes par rapport à la couche de résistance à la pression 3. On peut, de plus, comme représenté sur la figure 2, protéger mécaniquement la gaine externe par une couche de feuillard agrafé 8, ou tout autre couche de protection équivalente, par exemple une couche en fil Zéta..

La structure de conduite flexible ainsi constituée permet de comporter un liner métallique qui assure une parfaite étanchéité interne, alors que les reprises d'effort de pression interne, de pression externe, et de traction étant dévolues aux autres couches de renfort.

Pour mieux comprendre la présente invention, on insiste ci-après sur la différence conceptuelle avec les conduites flexibles classiques.

Dans une structure de flexible classique comprenant une gaine interne d'étanchéité en matériau plastique, la première couche intérieure est généralement un feuillard agrafé, dimensionné pour reprendre les efforts de pression externe qui peuvent s'appliquer sur la gaine interne du fait d'une déchirure de la gaine extérieure, mais aussi du fait de la pression des gaz qui peuvent s'être accumulés dans l'annulaire par perméation à travers la gaine interne.

Dans la présente invention, une couche interne en feuillard agrafé ne peut être introduite que très difficilement dans un flexible comportant un liner métallique intérieur, pour des raisons évidentes de fabrication. Ce liner est, par ailleurs, par construction trop mince pour reprendre valablement les efforts de pression externe. Toutefois, il n'y a plus de possibilité de piégeage de gaz sous pression dans l'annulaire, compte tenu de l'étanchéité totale conférée par le liner métallique. Une gaine d'étanchéité de résistance à la pression externe peut, et doit être placée au-dessus de la couche de fils orientés circonférentiellement, et de préférence, en dessous des armures de traction où la gaine sera protégée des agressions extérieures susceptibles d'en détruire l'intégrité. De ce fait, la couche de fils orientés circonférentiellement est dimensionnée pour reprendre à la fois la pression interne et la pression externe. Dans le cas des conduites flexibles classiques (avec gaine interne en matériau plastique), il n'est pas envisageable de supprimer la carcasse interne (feuillard agrafé) et de disposer d'une gaine d'étanchéité sur la couche circonférentielle, car la pression des gaz accumulés entre les deux gaines serait alors susceptible de détruire par écrasement (collapse) la gaine interne non soutenue par ladite carcasse.

Il n'est pas possible non plus d'envisager d'introduire un liner métallique mince dans une structure connue de conduite flexible simplifiée utilisant des armures à 55° qui reprennent à la fois les efforts longitudinaux et circonférentiels de pression interne. En effet, cette disposition d'armures ne peut pas supporter la pression externe en l'absence de carcasse (par exemple en feuillard agrafé). Donc, la présente invention impose une couche de fils enroulés circonférentiellement, c'est-à-dire avec un angle proche de 90° par rapport à l'axe de la conduite.

Cette structure est avantageusement utilisée pour un service de transport pétrolier sur le fond de la mer, correctement enterrée dans une tranchée qui va ensuite empêcher le mouvement de la conduite lors des mises en pression successives pendant le service tout le long de la vie de la conduite.

Le liner métallique est déterminé pour être compatible avec la structure environnante pour les raisons ci-après.

Lors de l'épreuve hydraulique du flexible après fabrication, le liner va être plaqué sur la paroi supérieure mécaniquement résistante du flexible, avec d'éventuelles déformations plastiques circonférentielles et longitudinales; mais compte tenu que le liner est confiné, et du taux de déformation plastique admissible dans les matériaux choisis, il ne sera pas détruit. Après l'épreuve, le tube métallique interne pourra, dans certains cas, même posséder une déformation résiduelle en compression, susceptible d'être favorable à sa vie postérieure en fatigue et en corrosion.

Au moment de la pose de la conduite, le liner subira à nouveau une série de déformations élastiques et plastiques en flexion, admissibles par le matériau, car typiquement restant de l'ordre de quelques pour cent par rapport à la déformation admissible avant rupture.

Enfin, pendant la durée opérationnelle de la production de pétrole, le liner est plaqué, dans le sens radial, sur la couche de renfort mécaniquement résistante, et est empêché de tout mouvement longitudinal par le poids de sa souille, les déformations en fatigue qu'il subira resteront acceptables.

Dans le cas où le flexible n'est pas ensouillé, on pourra utiliser une alternative pour empêcher les déplacements dans le sens longitudinal du liner. Il est connu de munir une conduite flexible d'une nappe d'armures suffisamment fournie et dimensionnée pour limiter, sous la pression de service, les déformations longitudinales à des valeurs suffisamment faibles pour être compatibles avec les caractéristiques mécaniques du tube mince liner.

Exemple de dimensions d'une structure de flexible avec tube (liner) métallique interne:

| Tube métallique interne 1 : | |
|---|---|
| Diamètre : | 152 mm |
| Epaisseur | 2 mm |
| Acier austéno ferritique | |

| Couche de résistance à la pression 3 : fil de forme en Z, autoagrafable du type Zéta | |
|---|---|
| Diamètre | 156 mm |
| Epaisseur | 6,2 mm |

| Gaine polyamide 4 : | |
|---|---|
| Diamètre | 168,4 mm |
| Epaisseur | 2 à 4 mm |

| Nappes d'armures de traction 5 : deux nappes de fils d'armures croisées à des angles ±35° par rapport à l'axe du tube, d'épaisseur 2 mm, acier à hautes caractéristiques mécaniques | |
|---|---|
| Diamètre | 172,4 à 176,4 mm |
| Epaisseur | 4 mm |

| Gaine externe polyamide 6 : | |
|---|---|
| Diamètre | 180,4 à 184,4 mm |
| Epaisseur | 3 mm |

Dans une variante, une couche 2 peut être intercalée entre le tube 1 et la couche 3 de façon à protéger de l'effet de poinçonnement du tube en pression. Cette couche est bobinée sur le liner ou extrudée. Les caractéristiques mécaniques de cette couche sont déterminées de façon qu'en température et en pression le fluage soit faible entre les joints des spires de la couche de renfort à la pression.

Les performances de cette structure lui permettrait d'atteindre une pression interne de service de 30 MPa et de supporter une pression externe de l'ordre de 9 MPa (correspondant à celle qui s'exerce dans 900 m d'eau).

Par rapport aux structures de flexibles actuellement utilisées, la présente structure peut permettre des températures de service beaucoup plus élevées, en effet, l'étanchéité parfaite du liner résout le problème de perméabilité aux gaz des gaines en polymère selon l'art antérieur. De plus, on peut utiliser des armures optimisées du point de vue de la qualité de leur acier, sans subir les contraintes dues à la présence connue des gaz corrosifs et fragilisants derrière les gaines en matériau polymère. Pour les mêmes conditions d'utilisation, les armures de flexibles classiques (gaine polymérique non étanche au gaz) ont comparativement des épaisseurs d'acier bien supérieures. Ainsi, seule la matière du liner doit être compatible avec la nature des effluents transportés par ladite conduite, les autres matériaux constitutifs non pas besoin d'être compatibles avec l'H₂S.

## Revendications

1. Conduite flexible renforcée qui comporte en combinaison, de l'axe de la conduite vers l'extérieur, un tube intérieur (1) métallique cylindrique et étanche aux effluents transportés par ladite conduite, une couche (3) de résistance à la pression interne et à la pression externe constituée par des fils métalliques enroulés en hélice à pas faible autour dudit tube intérieur, une gaine d'étanchéité (4, 6 ; 7) en matière plastique extrudée.

2. Conduite flexible selon la revendication 1, dans laquelle une couche intermédiaire (2) en matière plastique est intercalée entre le tube intérieur (1) et la couche (3) de résistance aux pressions.

3. Conduite flexible selon la revendication 2, dans laquelle ladite couche intermédiaire (2) est extrudée sur ledit tube continu (1).

4. Conduite flexible selon l'une des revendications 1 ou 2, dans laquelle ladite couche intermédiaire (2) est constituée par une bande enroulée sur ledit tube continu.

5. Conduite flexible selon l'une des revendications précédentes, qui comporte au moins une couche d'armures de résistance à la traction (5) disposée extérieurement à ladite couche (3) de résistance à la pression, la couche d'armures de résistance à la traction (5) comportant des fils métalliques.

6. Conduite flexible selon la revendication 5, dans laquelle ladite gaine d'étanchéité (4) est disposée entre la couche (3) de résistance à la pression et la couche (5) d'armures de résistance à la traction.

7. Conduite flexible selon la revendication 5, dans laquelle ladite gaine d'étanchéité (6 ; 7) est disposée extérieurement à la couche d'armures (5) de résistance à la traction.

8. Conduite flexible selon la revendication 7, dans laquelle ladite gaine d'étanchéité (7) est protégée extérieurement par une couche flexible métallique (8), par exemple un feuillard agrafé.

9. Conduite flexible selon la revendication 5, qui comporte deux gaines d'étanchéité, l'une (4) directement sur la couche (3) de résistance à la pression et l'autre (6) au-dessus de la couche (5) des armures de résistance à la traction.

10. Conduite flexible selon l'une des revendications précédentes, dans laquelle les fils métalliques constituant la couche (3) de résistance à la pression ont un profil en T.

## Patentansprüche

1. Verstärkte flexible Leitung, bestehend, von der Achse der Leitung ab zur Außenseite, aus einem zylindrischen inneren Metallrohr (1), das den mittels der besagten Leitung geleiteten Effluenten gegenüber dicht ist, einer innen- und außendruckfesten Schicht (3) aus metallischen, mit einem kleinen Schritt um das besagte Innenrohr schraubenförmiggewickelten Drähte, und einem Dichtungsmantel (4, 6 ; 7) aus extrudiertem Kunststoff.

2. Flexible Leitung gemäß Anspruch 1, in welcher eine zwischenliegende Kunststoffschicht (2) zwischen Innenrohr (1) und druckfeste Schicht (3) eingeschaltet ist.

3. Flexible Leitung gemäß Anspruch 2, in welcher die besagte Zwischenschicht (2) auf dem besagten durchgehenden Rohr (1) extrudiert ist.

4. Flexible Leitung gemäß irgendeinem der Ansprüche 1 or 2, in welcher die besagte Zwischenschicht (2) aus einem um das besagte durchgehende Rohr gewickelten Band besteht.

5. Flexible Leitung gemäß irgendeinem der vorstehenden Ansprüche, mindestens bestehend aus einer auf der Außenseite der besagten druckfesten Schicht (3) angeordneten, zugfesten Schicht (5), wobei die zugfeste Schicht (5) Metalldrähte enthält.

6. Flexible Leitung gemäß Anspruch 5, in welcher der besagte Dichtungsmantel (4) zwischen der druckfesten Schicht (3) und der zugfesten Schicht (5) angeordnet ist.

7. Flexible Leitung gemäß Anspruch 5, in welcher der besagte Dichtungsmantel (6 ; 7) auf der Außenseite der zugfesten Schicht (5) angeordnet ist.

8. Flexible Leitung gemäß Anspruch 7, in welcher der besagte Dichtungsmantel (7) äußerlich mittels einer metallischen flexiblen Schicht (8), zum Beispiel eines verbundenen Stahlbands, geschützt ist.

9. Flexible Leitung gemäß Anspruch 5, bestehend aus zwei Dichtungsmänteln, wobei der eine (4) unmittelbar auf der druckfesten Schicht (3) und der andere (6) über der zugfesten Schicht (5) angeordnet ist.

10. Flexible Leitung gemäß irgendeinem der vorstehenden Ansprüche, in welcher die die druckfeste Schicht (3) bildende Metalldrähte ein T-Profil aufweisen.

## Claims

1. Reinforced flexible piping comprising in combination, from the axis of the pipe towards the exterior, a cylindrical inner metal tube (1) which is impermeable to the effluents conveyed by said piping, a layer (3) which is capable of withstanding the internal pressure and the external pressure, consisting of wires helically wound with a small pitch around said inner tube and a sealing sheath (4, 6; 7) made from extruded plastic.

2. Flexible piping as claimed in claim 1, wherein an intermediate layer (2) made of a plastic material is inserted between the inner tube (1) and the pressure-resistant layer (3).

3. Flexible piping as claimed in claim 2, wherein said intermediate layer (2) is extruded onto the said continuous tube (1).

4. Flexible piping as claimed in one of claims 1 or 2, wherein said intermediate layer (2) consists of a strip wound onto said continuous tube.

5. Flexible piping as claimed in one of the preceding claims, which has at least one layer of reinforcement resistant to traction (5) arranged externally to said pressure-resistant layer (3), the traction-resistant reinforcing layer (5) comprising wires.

6. Flexible piping as claimed in claim 5, wherein said sealing sheath (4) is arranged between the layer (3) of pressure-resistant reinforcement and the layer (5) of reinforcement resistant to traction.

7. Flexible piping as claimed in claim 5, wherein said sealing sheath (6; 7) is arranged externally to the layer of traction-resistant reinforcement (5).

8. Flexible piping as claimed in claim 7, wherein said sealing sheath (7) is externally protected by a flexible metal layer (8), for example an interlocked steel tape.

9. Flexible piping as claimed in claim 5, which has two sealing sheaths, one (4) directly on the pressure-resistant layer (3) and the other (6) underneath the layer of reinforcement (5) resistant to traction.

10. Flexible piping as claimed in one of the preceding claims, wherein the profile of the wires forming the pressure-resistant layer (3) is T-shaped.
